# EUROPÄISCHE PATENTSCHRIFT

(11) **EP 3 715 154 B1**
(45) Veröffentlichungstag und Bekanntmachung des Hinweises auf die Patenterteilung: **09.03.2022**
(21) Anmeldenummer: 20163723.8
(22) Anmeldetag: 17.03.2020
(51) Int. Cl.: B60D 1/14, A01B 59/043, B60D 1/46, B60D 1/50, B60D 1/06, B60D 1/155

(54) **ANHÄNGEVORRICHTUNG FÜR EIN LANDWIRTSCHAFTLICHES FAHRZEUG**
TRAILER DEVICE FOR AN AGRICULTURAL VEHICLE
DISPOSITIF DE REMORQUAGE POUR UN VÉHICULE AGRICOLE

(30) Priorität: 29.03.2019 DE 102019204473
(43) Veröffentlichungstag der Anmeldung: 30.09.2020
(73) Patentinhaber: Deere & Company, Moline, IL 61265 (US)
(72) Erfinder: Hingne, Abhijeet, 68163 Mannheim (DE); Adsul, Amol, 68163 Mannheim (DE); Spohn, Benjamin, 68163 Mannheim (DE)
(74) Vertreter: Dehnhardt, Florian Christopher

(56) Entgegenhaltungen:
- EP-A1- 1 982 853
- DE-A1-102016 212 624
- GB-A- 1 370 363
- GB-A- 2 217 169
- GB-A- 2 396 283

## Beschreibung

Die Erfindung betrifft eine Pick-up Hitch für ein landwirtschaftliches Fahrzeug, mit einem Rahmenteil und einem in dem Rahmenteil längsverschiebbar gelagerten Führungsteil mit einem endseitig vorgesehenen Kupplungselement, wobei sich das Rahmenteil mittels eines Hubwerks zum Anheben und Absenken des Kupplungselements gegenüber einem Grundrahmen zur Anbringung an einer tragenden Fahrzeugstruktur verschwenken lässt.

Eine derartige Pick-up Hitch geht beispielsweise aus der DE 100 65 161 A1 und aus der GB 1 370 363 hervor. Die aus der DE 100 65 161 A1 bekannte Pick-up Hitch umfasst ein oberes Rahmenteil, ein unteres Rahmenteil und ein Führungsteil mit einer daran angebrachten Kupplungskugel. Das obere Rahmenteil ist mittels zugehöriger Befestigungsplatten an einem Hinterachsdifferentialgehäuse eines landwirtschaftlichen Fahrzeugs starr angebracht und bildet insoweit einen Teil des Fahrzeugrumpfs. Im vorderen Bereich des Rahmenteils ist eine quer zur Fahrzeuglängsrichtung verlaufende Horizontalschwenkachse ausgebildet, an der das vordere Ende des unteren Rahmenteils angelenkt ist. Im Bereich des hinteren Endes sind am unteren Rahmenteil zwei quer nach außen gerichtete Bolzen vorgesehen. An diesen Bolzen lassen sich die Enden eines hydraulischen Hubgestänges anbringen, durch das sich das untere Rahmenteil um die Horizontalschwenkachse verstellen lässt, sodass sich dessen hinteres Ende mitsamt der Kupplungskugel wunschgemäß anheben oder absenken lässt. Das untere Rahmenteil ist nach Art einer Kassette ausgebildet und weist einen im Wesentlichen rechteckigen Kanal auf, in dem das Führungsteil in Längsrichtung verschiebbar gelagert ist. Zur Verschiebung des Führungsteils findet ein Hydraulikzylinder Verwendung, dessen eines Ende an der Horizontalschwenkachse und dessen anderes Ende an dem Führungsteil angreift.

Die zulässigen Hublasten werden hierbei im Wesentlichen durch das Leistungsvermögen des verwendeten hydraulischen Hubgestänges begrenzt. Aufgrund von Bauraumbeschränkungen und systemseitig einzuhaltenden Hydraulikleistungen lässt sich die zulässige Hublast nicht ohne weiteres erhöhen.

Es ist daher Aufgabe der vorliegenden Erfindung, eine Anhängevorrichtung der eingangs genannten Art derart weiterzubilden, dass diese mit vergleichsweise geringem Aufwand eine Erhöhung der zulässigen Hublast erlaubt.

Diese Aufgabe wird durch eine Pick-up Hitch für ein landwirtschaftliches Fahrzeug mit den Merkmalen des Patentanspruchs 1 gelöst.

Die erfindungsgemäße Pick-up Hitch für ein landwirtschaftliches Fahrzeug umfasst ein Rahmenteil und ein in dem Rahmenteil längsverschiebbar gelagertes Führungsteil mit einem endseitig vorgesehenen Kupplungselement, wobei sich das Rahmenteil mittels eines Hubwerks zum Anheben und Absenken des Kupplungselements gegenüber einem Grundrahmen zur Anbringung an einer tragenden Fahrzeugstruktur verschwenken lässt. Zwischen dem Grundrahmen und dem Rahmenteil ist wenigstens ein Federelement derart angeordnet, dass dieses eine ein Anheben des Kupplungselements unterstützende Vorspannung auf das Rahmenteil ausübt. Bei unveränderter Auslegung des Hubwerks lässt sich daher eine um den Betrag der Vorspannung erhöhte zulässige Hublast erzielen, was insbesondere im Falle eines als hydraulische Hubgestänge ausgebildeten Hubwerks zu einer dementsprechend verbesserten Nutzung der systemseitig einzuhaltenden Hydraulikleistungen führt. Eine lastbedingt erforderlich werdende bauliche Anpassung beschränkt sich dabei auf die übrigen tragenden Komponenten der Anhängevorrichtung.

Das Hubwerk muss in der Lage sein, in beiden Betätigungsrichtungen entsprechende Stellkräfte auszuüben, da beim Absenken des Rahmenteils bei fehlender Anhängelast am Kupplungselement im Wesentlichen die volle Vorspannung des Federelements zu überwinden ist. Im Falle der Verwendung eines hydraulischen Hubgestänges mit einem Hydraulikzylinder ist dieser doppeltwirkend ausgebildet. Alternativ ist jedoch auch der Einsatz von mit hydraulischen oder elektrischen Motoren ausgestatteten Stellantrieben denkbar.

Der Nutzen der erfindungsgemäßen Pick-up Hitch lässt sich anhand der folgenden Beispielrechnung eindrucksvoll belegen: Wird davon ausgegangen, dass die maximale Stellkraft des Hubwerks 70 kN beträgt und die Vorspannung des Federelements derart gewählt ist, dass diese einer Gegenkraft von 30 kN entspricht, so ergibt sich eine maximale Gesamthubkraft von 70 kN + 30 kN = 100 kN bei Verwendung ein und desselben Hubwerks.

Die Pick-up Hitch ist typischerweise Bestandteil eines als landwirtschaftlicher Traktor ausgebildeten landwirtschaftlichen Fahrzeugs. Das Rahmenteil ist hierbei über den Grundrahmen an der als Hinterachsdifferentialgehäuse ausgebildeten tragenden Fahrzeugstruktur verschwenkbar angelenkt. Bei dem Kupplungselement handelt es sich zum Beispiel um eine von dem Führungsteil abnehmbare Kugelkupplung zur Anbringung diverser landwirtschaftlicher Anbau- oder Zusatzgeräte.

Vorteilhafte Weiterbildungen der erfindungsgemäßen Pick-up Hitch gehen aus den Unteransprüchen hervor.

Um eine gleichmäßiges Lastverteilung innerhalb der tragenden Komponenten der Pick-up Hitch sicherzustellen, besteht die Möglichkeit, dass insgesamt zwei der Federelemente in symmetrischer Anordnung beidseits des Rahmenteils verlaufen.

Diese weisen dabei eine bezüglich ihrer Federkennlinie übereinstimmende Dimensionierung auf.

Bei dem Federelement kann es sich insbesondere um eine schmutzunempfindliche und einfach herzustellende Blattfeder handeln, wobei die Blattfeder in einem ersten Endbereich an dem Grundrahmen befestigt ist und in einem zweiten Endbereich - ungeachtet der jeweiligen Schwenkstellung des Rahmenteils - fest an einem Gegenlager des Rahmenteils anliegt. Letzteres erlaubt nicht nur ein ruckfreies Verschwenken des Rahmenteils, sondern bietet auch zusätzliche Sicherheit im Falle eines Versagens bzw. Bruchs des daran angebrachten Gegenlagers.

Bei dem Gegenlager kann es um einen an dem Rahmenteil seitlich hervorspringenden Lagerbolzen handeln, wobei der zweite Endbereich der Blattfeder den Lagerbolzen zumindest abschnittsweise bogenförmig umgreift, sodass einer beim Absenken des Rahmenteils auftretenden Verformung der Blattfeder insoweit Rechnung getragen werden kann, dass ein Abspringen bzw. Abrutschen vom Lagerbolzen ausgeschlossen ist.

Um die Blattfeder im Bereich ihrer Befestigung am Grundrahmen zu entlasten, ist es im Hinblick auf eine möglichst flächige Krafteinleitung von Vorteil, wenn die Blattfeder im ersten Endbereich mittels einer einem Biegeverlauf der Blattfeder beim Anheben und Absenken des Rahmenteils folgenden, insbesondere konisch geformten Halterung angebracht ist.

Des Weiteren kann die Blattfeder mittels einer in einem Zwischenbereich anliegenden Laufrolle am Rahmenteil unter Vorspannung gesetzt sein. Die Laufrolle wird am Rahmenteil derart positioniert, dass auch bei vollständig angehobenem Rahmenteil eine Restspannung innerhalb der Blattfeder aufrechterhalten bleibt. Auf diese Weise lassen sich fahrtbedingt angeregte Schwingungen, die zu Klappergeräuschen oder dergleichen führen können, sicher vermeiden.

Gemäß einer alternativen Ausführungsform des wenigstens einen Federelements kann es sich bei diesem um eine Zugfeder handeln. Die Zugfeder ist hierbei in einem ersten Endbereich am Grundrahmen und in einem zweiten Endbereich an einem Gegenlager des Rahmenteils befestigt. Bei der Zugfeder handelt es sich um eine aus Stahl hergestellte Schraubenfeder, die im ersten Endbereich mit einem ersten Schenkel an einem Vorsprung am Grundrahmen und im zweiten Endbereich mit einem zweiten Schenkel am Gegenlager eingehängt ist.

Die erfindungsgemäße Pick-up Hitch wird im Folgenden anhand der beigefügten Zeichnungen näher erläutert. Dabei sind hinsichtlich ihrer Funktion übereinstimmende bzw. vergleichbare Komponenten mit denselben Bezugszeichen gekennzeichnet. Es zeigen:
Fig. 1 ein erstes Ausführungsbeispiel der erfindungsgemäßen Pick-up Hitch mit einem als Blattfeder ausgebildeten Federelement in einer vollständig abgesenkten Betriebsstellung,
Fig. 2 eine vereinfachte Darstellung der in Fig. 1 wiedergegebenen Pick-up Hitch
Fig. 3 die in Fig. 1 wiedergegebene Pick-up Hitch in einer vollständig angehobenen Betriebsstellung,
Fig. 4 die in Fig. 3 wiedergegebene Pick-up hitch mit zusätzlich ausgefahrenem Führungsteil, und
Fig. 5 ein zweites Ausführungsbeispiel der erfindungsgemäßen Pick-up Hitch mit einem als Zugfeder ausgebildeten Federelement.

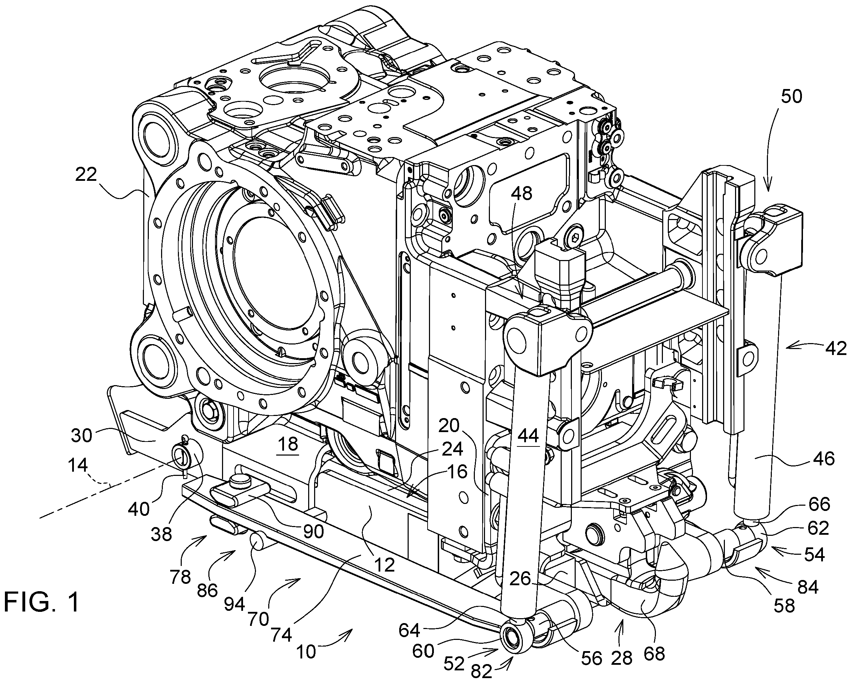

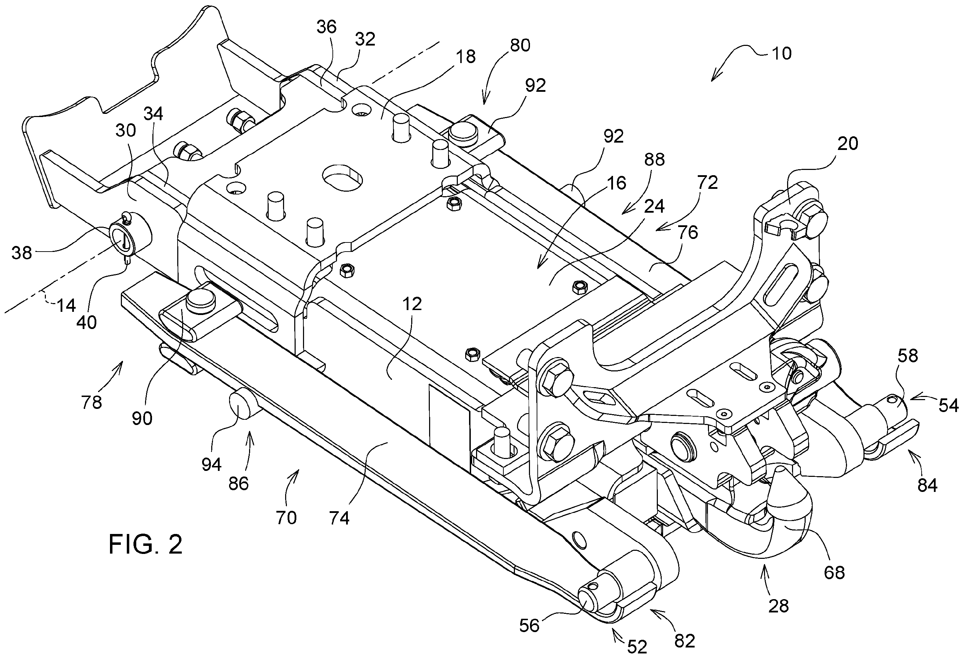

Fig. 1 zeigt ein erstes Ausführungsbeispiel der erfindungsgemäßen Pick-up Hitch an einem als landwirtschaftlicher Traktor ausgebildeten landwirtschaftlichen Fahrzeug, wobei bezüglich der konstruktiven Details ergänzend auf die vereinfachte Darstellung in Fig. 2 hingewiesen sei.

Die im Heckbereich des nicht abgebildeten landwirtschaftlichen Traktors vorgesehene Anhängevorrichtung 10 umfasst einen Grundrahmen 12 sowie ein an dem Grundrahmen 12 mittels einer Horizontalschwenkachse 14 angelenktes Rahmenteil 16. Der Grundrahmen 12 ist über einen ersten bzw. zweiten Befestigungsflansch 18, 20 an einer Unterseite bzw. Rückseite eines er als Hinterachsdifferentialgehäuse 22 des landwirtschaftlichen Traktors ausgebildeten tragenden Fahrzeugstruktur mittels zugehöriger Schraubbolzen montiert. Das Rahmenteil 16 bildet ein kassettenartiges Gehäuse 24, innerhalb dessen ein Führungsteil 26 mit einem endseitig vorgesehenen Kupplungselement 28 längsverstellbar gelagert ist. Zur Längsverstellung dient ein innerhalb des kassettenartigen Gehäuses 24 verlaufender Hydraulikzylinder (vorliegend nicht zu sehen), der sich seitens einer in dem landwirtschaftlichen Traktor vorhandenen Hydrauliksteuerung zum An- und Abkuppeln eines landwirtschaftlichen Anbau- oder Zusatzgeräts ein- und ausfahren lässt.

Die zur Anlenkung des Rahmenteils 16 vorgesehene Horizontalschwenkachse 14 ist im vorliegenden Fall von einer sich durch gegenüberliegende Rahmenseiten 30, 32, 34, 36 des Grundrahmens 12 bzw. des Rahmenteils 16 hindurcherstreckenden Hohlwelle 38 gebildet. Die Hohlwelle 38 ist stirnseitig mittels zugehöriger Splinte 40 gesichert.

Des Weiteren ist ein als hydraulisches Hubgestänge 42 ausgebildetes Hubwerk vorhanden. Das hydraulische Hubgestänge 42 umfasst linke und rechte Hydraulikzylinder 44, 46, von denen jeder über ein oberes Gelenk 48, 50 mit dem Hinterachsdifferentialgehäuse 22 und mit einem unteren Gelenk 52, 54, das durch an dem Rahmenteil 16 seitlich hervorspringende Lagerbolzen 56, 58 zur Anbringung eines Befestigungsauges 60, 62 eines Zylinderkolbens 64, 66 gebildet ist, in Verbindung steht, sodass sich das Rahmenteil 16 zum Anheben und Absenken des Kupplungselements 28 gegenüber dem Grundrahmen 12 und damit dem Hinterachsdifferentialgehäuse 22 verschwenken lässt. Die auf Veranlassung der Hydrauliksteuerung ein- und ausfahrbaren Hydraulikzylinder 44, 46 sind hierbei doppeltwirkend ausgebildet, sodass das hydraulische Hubgestänge 42 in der Lage ist, in beiden Betätigungsrichtungen entsprechende Stellkräfte auszuüben.

Bei dem Kupplungselement 28 handelt es sich um eine von dem Führungsteil 26 abnehmbare Kugelkupplung 68 zur Anbringung diverser landwirtschaftlicher Anbau- oder Zusatzgeräte.

Die grundsätzliche Funktion der Pick-up Hitch ist herkömmlich, sodass insofern auf weitere Einzelheiten nicht weiter eingegangen werden soll.

Zusätzlich sind zwischen dem Grundrahmen 12 und dem Rahmenteil 16 linke und rechte Federelemente 70, 72 mit bezüglich ihrer Federkennlinie übereinstimmender Dimensionierung derart angeordnet, dass diese eine ein Anheben des Kupplungselements 28 unterstützende Vorspannung auf das Rahmenteil 16 ausüben. Die beiden Federelemente 70, 72 verlaufen in symmetrischer Anordnung beidseits des Rahmenteils 16.

Gemäß Fig. 1 bzw. 2 handelt es sich bei den Federelementen 70, 72 um Blattfedern 74, 76, wobei jede der Blattfedern 74, 76 in einem ersten Endbereich 78, 80 an dem Grundrahmen 12 befestigt ist und in einem zweiten Endbereich 82, 84 ungeachtet der jeweiligen Schwenkstellung des Rahmenteils 16 fest an einem Gegenlager 86, 88 des Rahmenteils 16 anliegt.

Das Gegenlager 86, 88 ist vorliegend identisch mit dem an dem Rahmenteil 16 seitlich hervorspringenden Lagerbolzen 56, 58, wobei der zweite Endbereich 82, 84 der Blattfeder 74, 76 den Lagerbolzen 56, 58 zumindest abschnittsweise bogenförmig umgreift.

Um die Blattfeder 74, 76 im Bereich ihrer Befestigung am Grundrahmen 12 zu entlasten, ist diese im ersten Endbereich 78, 80 mittels einer einem Biegeverlauf der Blattfeder 74, 76 beim Anheben und Absenken des Rahmenteils 16 folgenden, vorliegend konisch geformten Halterung 90, 92 angebracht.

Die Blattfeder 74, 76 ist mittels einer in einem Zwischenbereich anliegenden Laufrolle 94, 96 am Rahmenteil 16 unter Vorspannung gesetzt. Die Laufrolle 94, 96 wird am Rahmenteil 16 derart positioniert, dass auch bei vollständig angehobenem Rahmenteil 16 eine Restspannung innerhalb der Blattfeder 74, 76 aufrechterhalten bleibt.

Die rechte Halterung 92 bzw. die rechte Laufrolle 96 ist hierbei in der Darstellung in Fig. 1 bzw. 2 baulich verdeckt und daher nicht sichtbar.

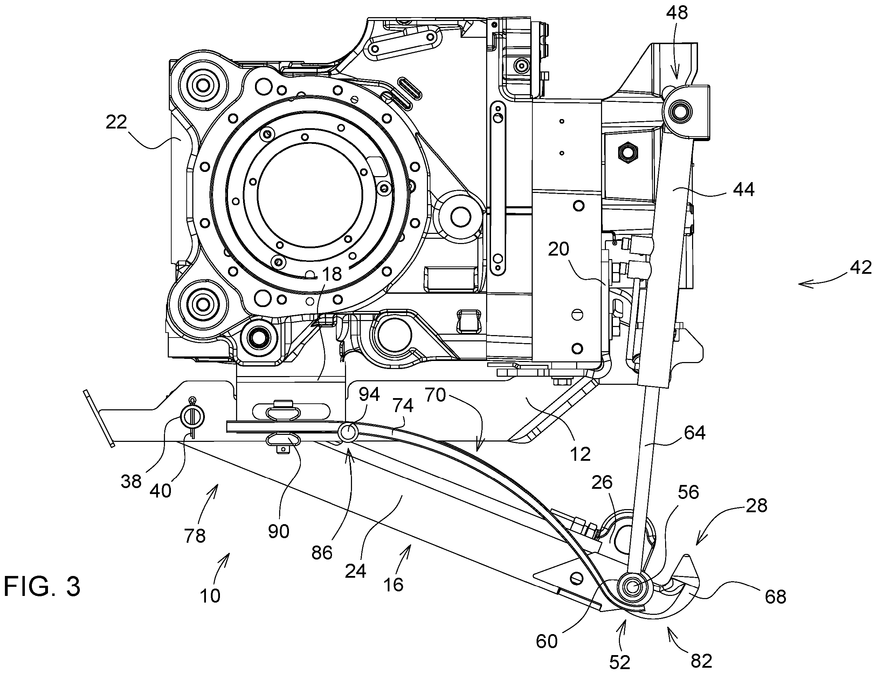

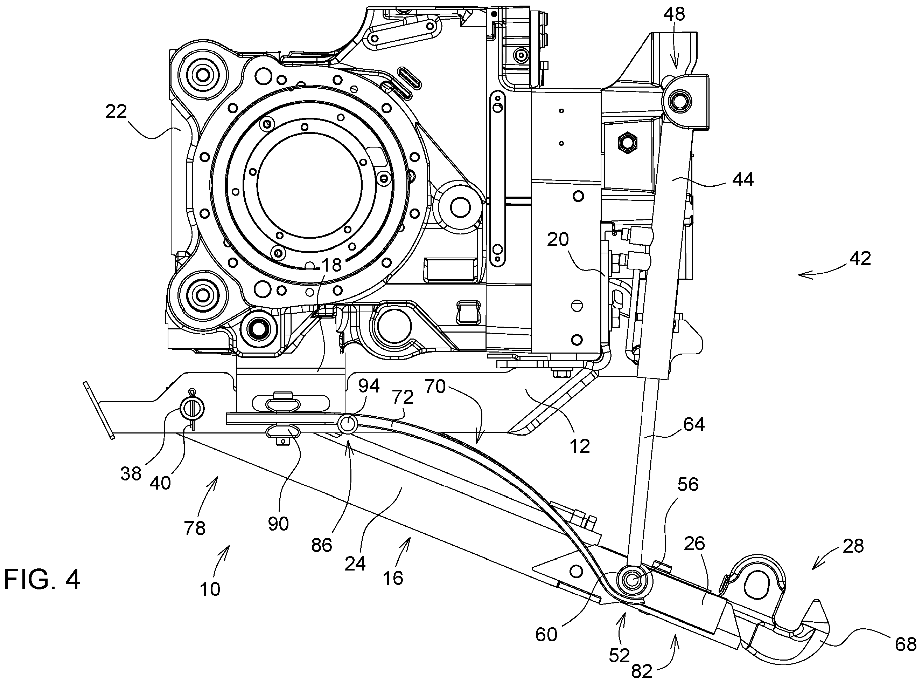

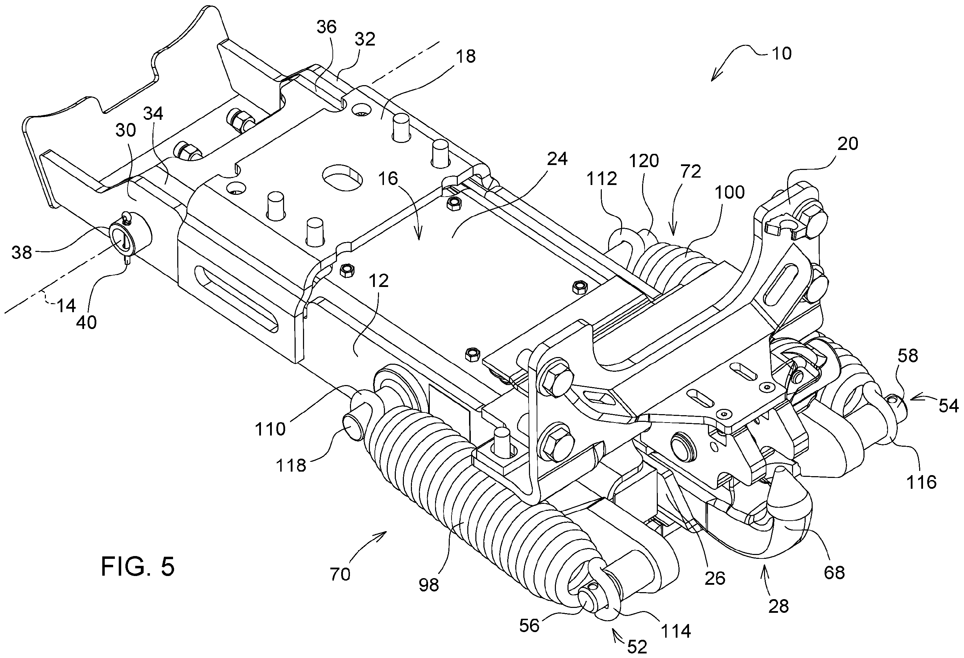

In Fig. 1 bzw. 2 befindet sich das Rahmenteil 16 in einer vollständig angehobenen Betriebsstellung, in Fig. 3 bzw. 4 hingegen ist dieses in einer vollständig abgesenkten Betriebsstellung dargestellt, wobei in Fig. 4 zusätzlich das Führungsteil 26 ausgefahren ist, um mittels des Kupplungselements 28 ein nicht dargestelltes komplementäres Kupplungsteil eines landwirtschaftlichen Anbau- oder Zusatzgeräts aufzunehmen. Fig. 5 zeigt ein zweites Ausführungsbeispiel der erfindungsgemäßen Pick-up Hitch 10. Demgemäß handelt es sich bei dem Federelement 70, 72 um eine Zugfeder 98, 100. Die Zugfeder 98, 100 ist hierbei in einem ersten Endbereich 102, 104 an dem Grundrahmen 12 und in einem zweiten Endbereich 106, 108 an dem Gegenlager 86, 88 des Rahmenteils 16 befestigt. Bei der Zugfeder 98, 100 handelt es sich um eine aus Stahl hergestellte Schraubenfeder, die im ersten Endbereich 102, 104 mit einem ersten Schenkel 110, 112 an einem Vorsprung 118, 120 am Grundrahmen 12 und im zweiten Endbereich 106, 108 mit einem zweiten Schenkel 114, 116 am Gegenlager 86, 88 eingehängt ist.

## Patentansprüche

1. Pick-Up Hitch für einen landwirtschaftlichen Traktor, mit einem Rahmenteil (16) und einem in dem Rahmenteil (16) längsverschiebbar gelagerten Führungsteil (26) mit einem endseitig vorgesehenen Kupplungselement (28), wobei sich das Rahmenteil (16) mittels eines Hubwerks (42) zum Anheben und Absenken des Kupplungselements (28) gegenüber einem Grundrahmen (12) zur Anbringung an einer tragenden Fahrzeugstruktur (22) verschwenken lässt, **dadurch gekennzeichnet, dass** zwischen dem Grundrahmen (12) und dem Rahmenteil (16) wenigstens ein Federelement (70, 72) derart angeordnet ist, dass dieses eine ein Anheben des Kupplungselements (28) unterstützende Vorspannung auf das Rahmenteil (16) ausübt.

2. Pick-Up Hitch nach Anspruch 1, **dadurch gekennzeichnet, dass** insgesamt zwei der Federelemente (70, 72) in symmetrischer Anordnung beidseits des Rahmenteils (16) verlaufen.

3. Pick-Up Hitch nach Anspruch 1 oder 2, **dadurch gekennzeichnet, dass** es sich bei dem Federelement (70, 72) um eine Blattfeder (74, 76) handelt, wobei die Blattfeder (74, 76) in einem ersten Endbereich (78, 80) an dem Grundrahmen (12) befestigt ist und in einem zweiten Endbereich (82, 84) an einem Gegenlager (86, 88) des Rahmenteils (16) anliegt.

4. Pick-Up Hitch nach Anspruch 3, **dadurch gekennzeichnet, dass** es sich bei dem Gegenlager (86, 88) um einen an dem Rahmenteil (16) seitlich hervorspringenden Lagerbolzen 56, 58) handelt, wobei der zweite Endbereich (82, 84) der Blattfeder (74, 76) den Lagerbolzen (56, 58) zumindest abschnittsweise bogenförmig umgreift.

5. Pick-Up Hitch nach Anspruch 3 oder 4, **dadurch gekennzeichnet, dass** die Blattfeder (74, 76) im ersten Endbereich (78, 80) mittels einer einem Biegeverlauf der Blattfeder (74, 76) beim Anheben und Absenken des Rahmenteils (16) folgenden, insbesondere konisch geformten Halterung (90, 92) angebracht ist.

6. Pick-Up Hitch nach wenigstens einem der Ansprüche 3 bis 5, **dadurch gekennzeichnet, dass** die Blattfeder (74, 76) mittels einer in einem Zwischenbereich anliegenden Laufrolle (94, 96) am Rahmenteil (16) unter Vorspannung gesetzt ist.

7. Pick-Up Hitch nach Anspruch 1 oder 2, **dadurch gekennzeichnet, dass** es sich bei dem wenigstens einen Federelement (70, 72) um eine Zugfeder (98, 100) handelt, wobei die Zugfeder (98, 100) in einem ersten Endbereich (102, 104) am Grundrahmen (12) und in einem zweiten Endbereich (106, 108) an einem Gegenlager (86, 88) des Rahmenteils (16) befestigt ist.

8. Landwirtschaftlicher Traktor, mit einer Pick-Up Hitch (10) nach wenigstens einem der Ansprüche 1 bis 7.

## Claims

1. Pick-up hitch for an agricultural tractor, having a frame part (16) and a guide part (26) which is mounted in the frame part (16) so as to be longitudinally displaceable and has a coupling element (28) provided on its end, wherein the frame part (16) can be pivoted by means of a lifting mechanism (42) for raising and lowering the coupling element (28) relative to a base frame (12) for attachment to a load-bearing vehicle structure (22), **characterized in that** at least one spring element (70, 72) is arranged between the base frame (12) and the frame part (16) such that said spring element exerts a preload on the frame part (16), assisting the raising of the coupling element (28).

2. Pick-up hitch according to Claim 1, **characterized in that** a total of two of the spring elements (70, 72) extend in a symmetric arrangement on both sides of the frame part (16).

3. Pick-up hitch according to Claim 1 or 2, **characterized in that** the spring element (70, 72) is a leaf spring (74, 76), wherein, in a first end region (78, 80), the leaf spring (74, 76) is fastened to the base frame (12), and in a second end region (82, 84), the leaf spring bears against a counter bearing (86, 88) of the frame part (16).

4. Pick-up hitch according to Claim 3, **characterized in that** the counter bearing (86, 88) is a bearing pin (56, 58) protruding laterally from the frame part (16), wherein the second end region (82, 84) of the leaf spring (74, 76) engages around the bearing pin (56, 58) at least partially in an arcuate manner.

5. Pick-up hitch according to Claim 3 or 4, **characterized in that** the leaf spring (74, 76) is attached in the first end region (78, 80) by means of an in particular conically shaped mount (90, 92) that follows a bending path of the leaf spring (74, 76) when the frame part (16) is raised and lowered.

6. Pick-up hitch according to at least one of Claims 3 to 5, **characterized in that** the leaf spring (74, 76) is placed under preload by means of a running roller (94, 96) bearing against the frame part (16) in an intermediate region.

7. Pick-up hitch according to Claim 1 or 2, **characterized in that** the at least one spring element (70, 72) is a tension spring (98, 100), wherein the tension spring (98, 100) is fastened in a first end region (102, 104) to the base frame (12) and in a second end region (106, 108) to a counter bearing (86, 88) of the frame part (16).

8. Agricultural tractor having a pick-up hitch (10) according to at least one of Claims 1 to 7.

## Revendications

1. Attache de chargement pour un tracteur agricole, comprenant une partie de cadre (16) et une partie de guidage (26) logée dans la partie de cadre (16) de manière à pouvoir se déplacer longitudinalement, comprenant un élément d'accouplement (28) prévu à l'extrémité, la partie de cadre (16) pouvant être amenée à pivoter au moyen d'un mécanisme de levage (42) pour soulever et abaisser l'élément d'accouplement (28) par rapport à un cadre de base (12) destiné à être monté sur une structure de véhicule porteuse (22), **caractérisée en ce qu'**au moins un élément de ressort (70, 72) est agencé entre le cadre de base (12) et la partie de cadre (16), de telle sorte que celui-ci exerce une précontrainte sur la partie de cadre (16) favorisant un soulèvement de l'élément d'accouplement (28) .

2. Attache de chargement selon la revendication 1, **caractérisée en ce qu'**au total deux des éléments de ressort (70, 72) s'étendent selon un agencement symétrique de part et d'autre de la partie de cadre (16) .

3. Attache de chargement selon la revendication 1 ou 2, **caractérisée en ce que** l'élément de ressort (70, 72) consiste en un ressort à lame (74, 76), le ressort à lame (74, 76) étant fixé dans une première zone d'extrémité (78, 80) au cadre de base (12) et reposant dans une deuxième zone d'extrémité (82, 84) sur un contre-appui (86, 88) de la partie de cadre (16).

4. Attache de chargement selon la revendication 3, **caractérisée en ce que** le contre-appui (86, 88) consiste en un axe de palier (56, 58) faisant saillie latéralement sur la partie de cadre (16), la deuxième zone d'extrémité (82, 84) du ressort à lame (74, 76) entourant l'axe de palier (56, 58) au moins en sections en forme d'arc.

5. Attache de chargement selon la revendication 3 ou 4, **caractérisée en ce que** le ressort à lame (74, 76) est monté dans la première zone d'extrémité (78, 80) au moyen d'une fixation (90, 92), notamment de forme conique, qui suit une courbe de flexion du ressort à lame (74, 76) lors du soulèvement et de l'abaissement de la partie de cadre (16).

6. Attache de chargement selon au moins une quelconque des revendications 3 à 5, **caractérisée en ce que** le ressort à lame (74, 76) est mis sous précontrainte sur la partie de cadre (16) au moyen d'un galet de roulement (94, 96) s'appliquant dans une zone intermédiaire.

7. Attache de chargement selon la revendication 1 ou 2, **caractérisée en ce que** l'au moins un élément de ressort (70, 72) consiste en un ressort de traction (98, 100), le ressort de traction (98, 100) étant fixé dans une première zone d'extrémité (102, 104) au cadre de base (12) et dans une deuxième zone d'extrémité (106, 108) à un contre-appui (86, 88) de la partie de cadre (16).

8. Tracteur agricole, comprenant une attache de chargement (10) selon au moins une quelconque des revendications 1 à 7.
